# EUROPÄISCHE PATENTANMELDUNG

(11) **EP 3 848 904 A1**
(43) Veröffentlichungstag der Anmeldung: **14.07.2021**
(21) Anmeldenummer: 20151014.6
(22) Anmeldetag: 09.01.2020
(51) Int. Cl.: G06T 11/00, G06T 5/50

(54) **VERFAHREN UND VORRICHTUNG ZUR BILDVERARBEITUNG**

(71) Anmelder: autoretouch GmbH, 71065 Sindelfingen (DE)
(72) Erfinder: Ciorapciu, Alex, 73730 Esslingen (DE); Baumann, Ulrich, 71083 Herrenberg (DE); Hartmann, Silvana, 70176 Stuttgart (DE); Lorentzen, Till, 70178 Stuttgart (DE)
(74) Vertreter: DREISS Patentanwälte PartG mbB

(57) **Zusammenfassung**

Vorrichtung und Verfahren zur Bildverarbeitung, wobei an einer Recheneinrichtung Daten basierend auf digitalen Bildern einer Außenansicht (806) eines Kleidungsstücks und einer Innenansicht (808) des Kleidungsstücks empfangen werden, wobei basierend auf den Daten und einem Modell (802) ein synthetisches digitales Bild (812) generiert wird, in welchem in einem ersten Bereich, der eine Öffnung des Kleidungsstücks in der Außenansicht (806) charakterisiert, ein zweiter Bereich dargestellt ist, der zumindest einen Teil der Innenansicht (808) charakterisiert, und wobei das synthetische digitale Bild (812) über eine insbesondere graphische Nutzerschnittstelle ausgegeben und/oder in einem Speicher gespeichert wird.

## Beschreibung

Die Erfindung geht aus von einem Verfahren und einer Vorrichtung zur Bildverarbeitung.

Eine Fotographie eines von einer Puppe oder einem Menschen getragenen Kleidungsstücks ermöglicht es, das Kleidungsstück besonders gut in einem digitalen Bild darzustellen. Eine photorealistische Darstellung des Kleidungsstücks, so wie es getragen wird, kann in einem digitalen Bild dargestellt werden, das keine Details der Puppe oder des Menschen enthält. Für die photorealistische Darstellung sind allerdings viele manuelle Arbeitsschritte mit Bildverarbeitungsprogrammen erforderlich. Wünschenswert ist es, den Aufwand, den diese Bearbeitungsschritte bedeuten, zu reduzieren.

Dies wird durch ein Verfahren zur Bildverarbeitung erreicht, das vorsieht, dass an einer Recheneinrichtung Daten basierend auf digitalen Bildern einer Außenansicht eines Kleidungsstücks und einer Innenansicht des Kleidungsstücks empfangen werden, wobei basierend auf den Daten und einem Modell ein synthetisches digitales Bild generiert wird, in welchem in einem ersten Bereich, der eine Öffnung des Kleidungsstücks in der Außenansicht charakterisiert, ein zweiter Bereich dargestellt ist, der zumindest einen Teil der Innenansicht charakterisiert, und wobei das synthetische digitale Bild über eine insbesondere graphische Nutzerschnittstelle ausgegeben und/oder in einem Speicher gespeichert wird. Durch Eingabe von zwei digitalen Bildern, der Außenansicht und der Innenansicht, wird ein synthetisches digitales Bild, ein sogenanntes Ghosting Bild erzeugt. Eine Vielzahl ansonsten dafür erforderlicher manueller Bearbeitungsschritte entfällt. Für synthetische digitale Bilder wird die Dauer der Erzeugung gegenüber der herkömmlichen Erzeugungsdauer signifikant reduziert.

Vorzugsweise wird ein Bildausschnitt in einem digitalen Bild der Außenansicht für den ersten Bereich basierend auf den Daten identifiziert, wobei Pixel des ersten Bereichs basierend auf Pixeln des Bildausschnitts für den ersten Bereich und dem Modell oder abhängig von wenigstens einer Regel, unabhängig von anderen Pixeln des digitalen Bildes der Außenansicht, bestimmt werden. Die anderen Pixel können für das synthetische digitale Bild unverändert übernommen werden. Der für das Ghosting Bild besonders relevante Bereich einer Öffnung in der Außenansicht, in der das synthetische Bild Teile der Innenansicht darstellt, kann damit unabhängig von den Pixeln außerhalb dieses Bereichs mit dem Modell verarbeitet werden. Da die Datenmenge für die Eingangsgrößen des Modells reduziert ist, reduzieren sich auch der Rechenaufwand und die Bearbeitungszeit.

Abhängig von den Daten kann wenigstens eine Kante in einem digitalen Bild der Außenansicht des Kleidungsstücks identifiziert werden, wobei der erste Bereich abhängig von der wenigstens einen Kante identifiziert wird. Kanten treten im digitalen Bild an Umrissen und an Öffnungen auf. Ein auf Kantenerkennung trainierter Teil des Modells kann dadurch zur Identifikation des ersten Bereichs verwendet werden. Dessen Ausgangsgrößen können die Eingangsgrößen für einen weiteren Teil des Modells bilden, in dem der erste Bereich und Pixel der Innenansicht weiterverarbeitet werden.

Vorzugsweise wird ein Bildausschnitt in einem digitalen Bild der Innenansicht für den zweiten Bereich basierend auf den Daten und dem Modell oder abhängig von wenigstens einer Regel identifiziert, wobei Pixel des zweiten Bereichs basierend auf Pixeln des Bildausschnitts für den zweiten Bereich, unabhängig von anderen Pixeln des digitalen Bildes der Innenansicht, bestimmt werden. Ein auf Mustererkennung trainierter Teil des Modells kann dadurch zur Identifikation des zweiten Bereichs verwendet werden, indem beispielsweise Pixel in der Innenansicht identifiziert werden, die ein Etikett und einen das Etikett umgebenden Ausschnitt des Kleidungsstücks darstellen. Dessen Ausgangsgrößen können die Eingangsgrößen für den weiteren Teil des Modells bilden, in dem der zweite Bereich und Pixel der Außenansicht weiterverarbeitet werden.

In einem Aspekt wird in einem digitalen Bild der Außenansicht des Kleidungsstücks ein Abschnitt identifiziert, der die Öffnung des Kleidungsstücks charakterisiert, wobei das synthetische digitale Bild einen dritten Bereich umfasst, der außerhalb des ersten Bereichs angeordnet ist und der abhängig von Pixeln bestimmt wird, die im digitalen Bild der Außenansicht des Kleidungsstücks außerhalb des Abschnitts angeordnet sind. Das synthetische digitale Bild kann dadurch auch teilweise durch eine Übernahme der Pixel aus dem digitalen Bild der Außenansicht erzeugt werden. Ein Training des Modells und eine Verarbeitung der anderen Pixel mit dem Modell ist dadurch für Pixel außerhalb des Abschnitts unnötig. Dies verbessert das Modell und reduziert den Rechenaufwand und die Bearbeitungsdauer.

Der erste Bereich, der zweite Bereich und/oder der dritte Bereich können skaliert und/oder zueinander ausgerichtet werden. Ein weiterer Teil des Modells oder ein herkömmlicher Bildverarbeitungsschritt können vorgesehen sein, um die Bereiche aufeinander abzustimmen. Dies verbessert die photorealistische Darstellung im synthetischen digitalen Bild.

Für das synthetische digitale Bild wird vorzugsweise abhängig von den Daten wenigsten ein Merkmal des synthetischen digitalen Bildes bestimmt, insbesondere ein Merkmal für einen Übergang von einem der Bereiche zu einem anderen der Bereiche, ein Merkmal für eine Konvexität oder eine Schattierung. Dadurch wird die photorealistische Darstellung im synthetischen digitalen Bild weiter verbessert.

In einem weiteren Aspekt werden an der Recheneinrichtung Daten basierend auf einem Prüfbild empfangen, wobei abhängig von den Daten basierend auf dem Prüfbild oder Daten des synthetischen digitalen Bildes mit einem vergleichenden Modell ein Vergleichsergebnis bestimmt wird, und wobei wenigstens ein Parameter des Modells und/oder des vergleichenden Modells abhängig vom Vergleichsergebnis bestimmt wird. In diesem Zusammenhang stellt das Modell ein generatives Modell für die synthetischen digitalen Bilder dar. Durch das vergleichende Modell wird erkannt, ob es sich um ein Prüfbild oder ein synthetisches digitales Bild handelt. Dies stellt ein Training dar, in dem die Parameter gelernt werden, durch die das generative Modell synthetische digitale Bilder erzeugt, die das vergleichende Modell nicht oder nur schwer als synthetische digitale Bilder erkennen kann. Für das vergleichende Modell können Parameter gelernt werden, die besonders gut dafür geeignet sind, zu erkennen ob es sich um ein Prüfbild einerseits oder ein synthetisches digitales Bild andererseits handelt. Sofern eines der Modelle als künstliches neuronales Netzwerk implementiert ist oder beide Modelle als künstliche neuronale Netzwerke implementiert sind, können die Parameter Gewichte und/oder Aktivierungsfunktionen charakterisieren.

Das Modell und oder das vergleichende Modell wird vorzugsweise anhand mehrerer vorheriger digitaler Bilder anderer Kleidungsstücke erhalten. Ein mit den Bildern anderer Kleidungsstücke trainiertes Modell ist dazu ausgebildet, synthetische digitale Bilder beliebiger Kleidungsstücke in photorealistischer Qualität darzustellen. Das Modell ist nach dem Training unabhängig vom vergleichenden Modell einsetzbar. Eine aufwendige manuelle Bearbeitung der fotografierten digitalen Bilder entfällt dadurch. Dies ermöglicht es, synthetische digitale Bilder beispielsweise für einen digitalen Marktplatz rasch und mit hoher Qualität herzustellen.

Das Modell und/oder das vergleichende Modell kann in einer Phase abhängig von einer Vielzahl digitaler Bilder von Kleidungsstücken und einer Vielzahl Prüfbilder trainiert werden, wobei das synthetische Bild in einer anderen Phase mit dem zuvor trainierten Modell bestimmt wird. Für die anderen Kleidungsstücke werden beispielsweise für einen Trainingsdatenpunkt je zwei digitale Bilder aufgenommen und manuell ein synthetisches digitales Bild erzeugt, das als Prüfbild in einem überwachten Lernverfahren dient. Dies stellt eine besonders effektive Trainingsmethode dar.

Eine entsprechende Vorrichtung zur Bildverarbeitung umfasst eine Recheneinrichtung, die ausgebildet ist, Daten basierend auf digitalen Bildern einer Außenansicht eines Kleidungsstücks und einer Innenansicht des Kleidungsstücks zu empfangen, basierend auf den Daten und einem Modell ein synthetisches digitales Bild zu generieren, in welchem in einem ersten Bereich, der eine Öffnung des Kleidungsstücks in der Außenansicht charakterisiert, ein zweiter Bereich dargestellt ist, der zumindest einen Teil der Innenansicht charakterisiert, und wobei die Vorrichtung eine insbesondere graphische Nutzerschnittstelle umfasst, die ausgebildet ist, das synthetische digitale Bild auszugegeben und/oder wobei die Vorrichtung einen Speicher umfasst, der ausgebildet ist, das synthetische digitale Bild zu speichern. Diese Vorrichtung kann zum raschen Erstellen von synthetischen Bildern eingesetzt werden. Beispielsweise ist es dadurch möglich, das synthetische digitale Bild in weniger als 2 Minuten zu erzeugen. Dadurch ist beispielsweise auch die Eignung zweier digitaler Bilder eines Kleidungsstücks für die photorealistische Darstellung in einem synthetischen digitalen Bild ohne Verzug überprüfbar.

Bevorzugt ist die Recheneinrichtung ausgebildet auch andere Schritte des Verfahrens auszuführen.

Weitere vorteilhafte Ausführungsformen ergeben sich aus der folgenden Beschreibung und der Zeichnung. In der Zeichnung zeigt
- Fig. 1: eine schematische Darstellung einer Vorrichtung zur Bildverarbeitung,
- Fig. 2: ein digitales Bild einer Außenansicht eines Oberteils,
- Fig. 3: ein digitales Bild einer Innenansicht des Oberteils,
- Fig. 4: ein synthetisches digitales Bild des Oberteils,
- Fig. 5: einen Bildausschnitt im digitalen Bild der Außenansicht des Oberteils,
- Fig. 6: einen Bildausschnitt im digitalen Bild der Innenansicht des Oberteils,
- Fig. 7: Schritte in einem Verfahren zur Bildverarbeitung,
- Fig. 8: eine schematische Darstellung einer Vorrichtung zum Trainieren der Vorrichtung zur Bildverarbeitung,
- Fig. 9: Schritte des Trainingsverfahrens.

Ein Generative Adversarial Network umfasst zwei künstliche neuronale Netzwerke. Das Generative Adversarial Network kann beispielsweise gemäß der in Ian Goodfellow, Jean Pouget-Abadie, Mehdi Mirza, Bing Xu, David Warde-Farley, Sherjil Ozair, Aaron Courville, Yoshua Bengio: Generative Adversarial Networks, NIPS 2014, https://papers.nips.cc/paper/5423-generative-adversarialnets NIPS, beschriebenen Vorgehensweise implementiert sein.

Das Generative Adversarial Network umfasst einen Generator und einen Diskriminator. Der Generator ist für eine Bildverarbeitung ein Modell, das basierend auf Daten von digitalen Bildern Daten für synthetische digitale Bilder erstellt. Die Daten eines digitalen Bildes umfassen im Beispiel für jeden Pixel des digitalen Bildes ein Tripel, das die zur Darstellung des Pixels zu mischenden Anteile Rot, Grün, Blau definiert. Eine Reihenfolge der Daten entspricht beispielsweise der Anordnung der Pixel im digitalen Bild von links oben nach rechts unten.

Die Daten eines ersten digitalen Bildes werden beispielsweise in einen ersten Bildtensor konkateniert. Die Daten eines zweiten digitalen Bildes werden im Beispiel in einen zweiten Bildtensor konkateniert. Der erste Bildtensor und der zweite Bildtensor werden im Beispiel in einen ersten Eingangstensor für den Generator konkateniert.

Der Generator bildet im Beispiel den ersten Eingangstensor auf einen ersten Ausgangstensor ab. Der erste Ausgangstensor stellt in diesem Beispiel Daten des synthetischen digitalen Bildes dar. Jeder Pixel des synthetischen digitalen Bildes ist im Beispiel durch ein Tripel definiert, das die zur Darstellung des Pixels zu mischenden Anteile Rot, Grün, Blau definiert. Im Beispiel definiert jedes der Elemente des ersten Ausgangstensors ein Pixel des synthetischen digitalen Bildes. Eine Reihenfolge der Daten entspricht beispielsweise der Anordnung der Pixel im digitalen Bild von links oben nach rechts unten.

Das Generative Adversarial Network umfasst latente, d.h. nicht direkt beobachtbare, Variablen, und Parameter, die die Abbildung des ersten Eingangstensors auf den ersten Ausgangstensor definieren. Die Parameter sind beispielsweise Gewichte oder definieren Aktivierungsfunktionen des Generators.

Der Diskriminator des Generative Adversarial Network ist ein vergleichendes Modell, das lernt zu unterscheiden, ob es sich bei seinem Eingangstensor um eine Repräsentation des vom Generator generierten synthetischen digitalen Bildes oder um eine Repräsentation des digitalen Prüfbildes handelt. Durch die Kopplung von Diskriminator und Generator im Training wird der Generator dazu angehalten ein photorealistisches synthetisches Bild zu erzeugen. Für das Training wird im Beispiel abhängig vom ersten Ausgangstensor oder abhängig von einem Prüftensor ein zweiter Eingangstensor für den Diskriminator bestimmt. Im Beispiel bildet entweder der erste Ausgangstensor oder der Prüftensor den zweiten Eingangstensor. Der Prüftensor wird im Beispiel abhängig von Daten des digitalen Prüfbilds erstellt. Das digitale Prüfbild wird im Beispiel manuell aus dem ersten digitalen Bild und dem zweiten digitalen Bild erstellt, dessen Daten vom Generator zur Bestimmung der Daten für das synthetische digitale Bild verwendet werden.

Der Diskriminator bildet den zweiten Eingangstensor im Beispiel auf einen zweiten Ausgangstensor ab. Abhängig vom zweiten Ausgangstensor wird im Beispiel ein Training des Generators beispielsweise gemäß dem in NIPS 2014 angegebenen Verfahren durchgeführt.

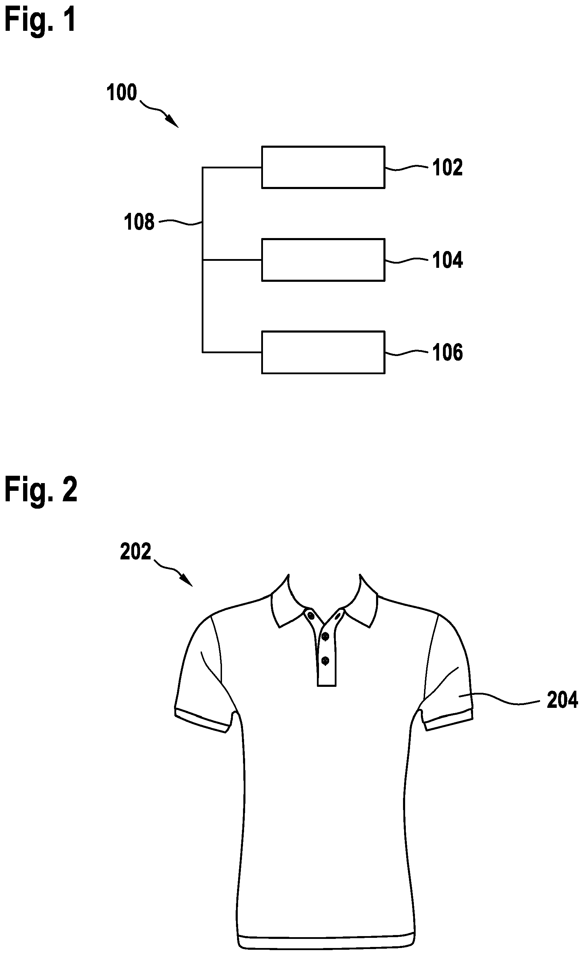

In Figur 1 ist eine Vorrichtung 100 zur Bildverarbeitung schematisch dargestellt.

Die Vorrichtung 100 umfasst eine Recheneinrichtung 102. Die Vorrichtung 100 kann eine Schnittstelle 104 und/oder einen Speicher 106 umfassen.

Die Recheneinrichtung 102 ist ausgebildet, Daten basierend auf digitalen Bildern einer Außenansicht eines Kleidungsstücks und einer Innenansicht des Kleidungsstücks zu empfangen.

Die Recheneinrichtung 102 ist ausgebildet, basierend auf den Daten und dem Modell ein synthetisches digitales Bild zu generieren, in welchem in einem ersten Bereich, der eine Öffnung des Kleidungsstücks in der Außenansicht charakterisiert, ein zweiter Bereich dargestellt ist, der zumindest einen Teil der Innenansicht charakterisiert.

Die Schnittstelle 104 umfasst eine graphische Nutzerschnittstelle, die ausgebildet ist, das synthetische digitale Bild auszugegeben. Die Schnittstelle 104 kann zum Empfangen der Daten der digitalen Bilder und weiterleiten der Daten für die Recheneinrichtung 102 ausgebildet sein.

Der Speicher 106 ist ausgebildet, das synthetische Bild zu speichern. Die Speicher 106 kann zum Senden der Daten der digitalen Bilder an die Recheneinrichtung 102 ausgebildet sein. Die Recheneinrichtung 102, der Speicher 106 und die Schnittstelle 104 sind im Beispiel mit einer Datenverbindung 108 verbunden.

Die Recheneinrichtung 102 ist ausgebildet, das im Folgenden beschriebene Verfahren auszuführen.

Die digitalen Bilder sind im Beispiel Bilder von Kleidungsstücken. Kleidungsstücke weisen Öffnungen beispielsweise am Kragen oder an den Ärmeln auf. Die Öffnungen ermöglichen es, in einem digitalen Bild, das eine Außenansicht des Kleidungsstücks darstellt, auch Teile einer Innenansicht des Kleidungsstücks zu sehen.

Je weiter die Öffnung des Kleidungsstücks geöffnet ist, desto größer ist der Teil der Innenansicht, der sichtbar wird. Sofern ein Mensch oder eine Puppe das Kleidungsstück bei der Anfertigung der Aufnahme der Außenansicht trägt, wird die Öffnung in der Außenansicht vom Menschen oder der Puppe zumindest teilweise ausgefüllt. Der Mensch oder die Puppe verdeckt dadurch zumindest teilweise die Innenansicht in einem digitalen Bild, das die Außenansicht des Kleidungsstückes darstellt. Für eine besonders gute Aufnahme ist es wünschenswert, das Kleidungsstück, so wie es von einem Menschen getragen wird, mit einem dreidimensionalen photorealistischen Effekt der Außenansicht darzustellen, ohne dass in der Aufnahme selbst sichtbar ist, dass der Mensch oder die Puppe das Kleidungsstück zum Zeitpunkt der Aufnahme trug.

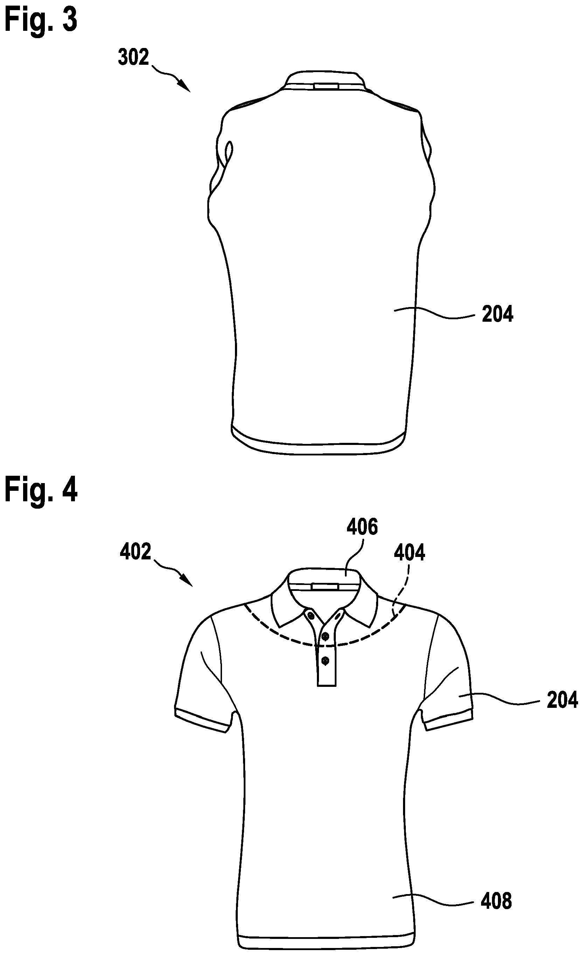

Figur 2 stellt ein digitales Bild einer Außenansicht 202 eines Oberteils 204 dar. Figur 3 stellt ein digitales Bild einer Innenansicht 302 des Oberteils 204 dar. Das Oberteil ist in den Figuren 2 und 3 schematisch durch seinen Umriss dargestellt. Der dreidimensionale Effekt, der ein photorealistisches Bild ausmacht, ist in den Figuren 2 und 3 nur angedeutet. In den digitalen Bildern sind Pixel dargestellt, die dem Oberteil 204 selbst zugeordnet sind. Andere Pixel sind beispielsweise mit einer Hintergrundfarbe oder schwarz oder weiß dargestellt oder durch einen Alpha-Kanal maskiert. Jede andere Hintergrundfarbe kann ebenfalls verwendet werden. Es kann vorgesehen sein, dass nur Pixel, die dem Oberteil 204 zugeordnet sind in der Bildverarbeitung verarbeitet werden.

Figur 4 stellt ein synthetisches digitales Bild 402 des Oberteils 204 dar. Das synthetische digitale Bild 402 wird mit dem im Folgenden beschriebenen Verfahren erzeugt. Im synthetischen digitalen Bild 402 ist in einem ersten Bereich 404, der eine Öffnung des Kleidungsstücks 204 in der Außenansicht 202 charakterisiert, ein zweiter Bereich 406 dargestellt, der zumindest einen Teil der Innenansicht 302 charakterisiert.

Es kann vorgesehen sein, dass nur Teile der Pixel verarbeitet werden, die dem Oberteil 204 zugeordnet sind.

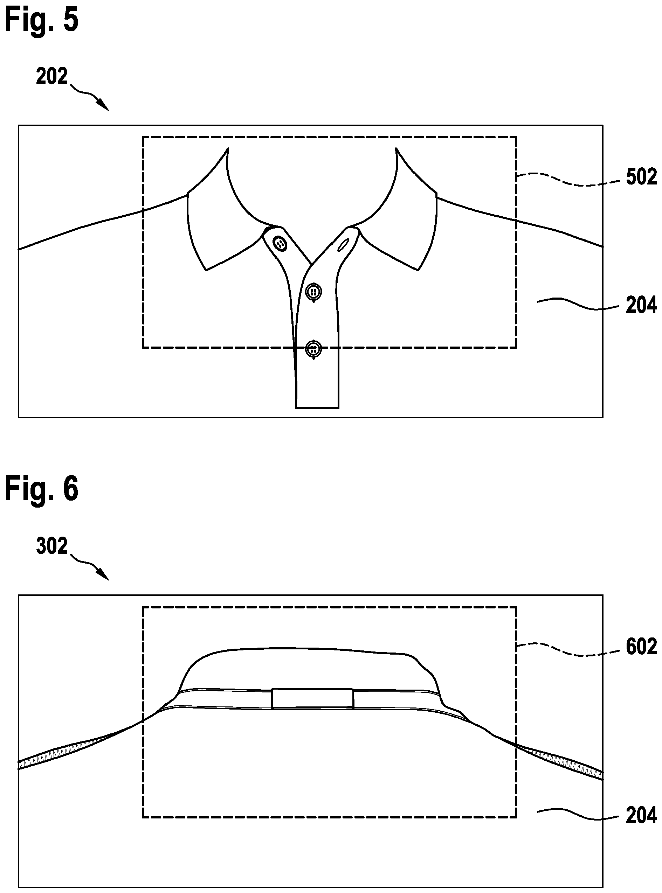

Figur 5 stellt einen Bildausschnitt 502 in der Außenansicht 202 des Oberteils 204 dar, der die Pixel umfasst, die in diesem Fall beispielsweise verarbeitet werden. Dieser Bildausschnitt 502 kann die Pixel definieren, die im synthetischen Bild 402 im ersten Bereich 404 angeordnet sind.

Figur 6 stellt einen Bildausschnitt 602 in der Innenansicht 302 des Oberteils 204 dar, der die Pixel umfasst, die in diesem Fall beispielsweise verarbeitet werden. Dieser Bildausschnitt 602 kann die Pixel definieren, die im synthetischen Bild 402 im zweiten Bereich 406 angeordnet sind.

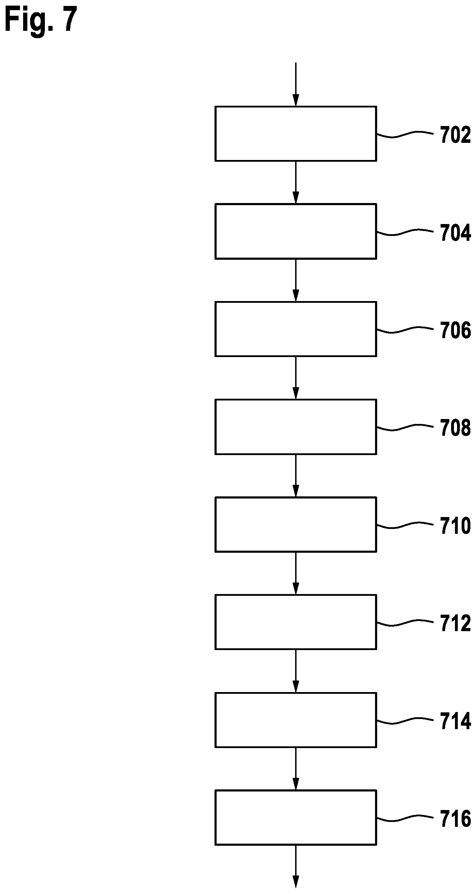

Figur 7 stellt schematisch Schritte im Verfahren zur Bildverarbeitung dar. Das im Verfahren eingesetzte Modell kann ein künstliches neuronales Netzwerk sein. Das künstliche neuronale Netzwerk umfasst eine Eingangsschicht, eine Ausgangsschicht und wenigstens eine dazwischen angeordnete verborgene Schicht. Für unterschiedliche Teilaufgaben können unterschiedliche Netzwerkteile oder automatisierte Bildverarbeitungsfunktionen vorgesehen sein. Ein Netzwerkteil kann eine Ausgangsgröße aufweisen, die Teile des verarbeiteten digitalen Bildes charakterisiert. Wenn ein einzelnes mehrschichtiges künstliches neuronales Netzwerk vorgesehen ist, sind diese Schritte in dessen latenten d.h. nicht beobachtbaren Variablen entsprechend abgebildet.

In einem Schritt 702 werden an der Recheneinrichtung 102 Daten basierend auf wenigstens einem digitalen Bild der Außenansicht 202 des Kleidungsstücks empfangen. Im Schritt 702 werden Daten wenigstens eines der digitalen Bilder der Innenansicht 302 des Kleidungsstücks empfangen. Das Kleidungsstück ist im Beispiel das Oberteil 204. Die Daten sind im Beispiel die Pixel, die durch die Werte der Tripel definiert sind. Andere Formen der Kodierung der digitalen Bilder sind ebenfalls möglich und werden wie analog verarbeitet.

In einem Schritt 704 wird der Bildausschnitt 502 im digitalen Bild der Außenansicht 202 für den ersten Bereich 404 basierend auf den Daten und dem Modell identifiziert.

Im digitalen Bild der Außenansicht 202 des Kleidungsstücks wird ein Abschnitt identifiziert, der die Öffnung des Kleidungsstücks charakterisiert. Der Abschnitt kann beispielsweise eine Kragenöffnung oder eine Ärmelöffnung oder eine Hosenöffnung oder eine Hosenbeinöffnung sein. Andere Pixel sind im digitalen Bild der Außenansicht 202 des Kleidungsstücks außerhalb des Abschnitts angeordnet. Pixel innerhalb des Abschnitts werden beispielsweise als erster Bereich 404 weiterverarbeitet, die anderen Pixel werden beispielsweise unverändert übernommen. Dies reduziert die Dimension der Eingangstensoren und damit den Rechenaufwand. Diese Mustererkennung kann auch abhängig von wenigstens einer Regel erfolgen, die beispielsweise Pixel des Bildausschnitts 502 aufgrund spezifischer Farbgebung und/oder Form als Teil der Öffnung identifiziert.

In einem Aspekt wird abhängig von den Daten und dem Modell wenigstens eine Kante im digitalen Bild der Außenansicht 202 des Kleidungsstücks identifiziert und der erste Bereich 404, der die Öffnung des Kleidungsstücks in der Außenansicht 202 charakterisiert, abhängig von der wenigstens einer Kante identifiziert. Beispielsweise ist ein Netzwerkteil zur Erkennung von Kanten in Kleidungsstücken trainiert.

In einem Schritt 706 werden Pixel des ersten Bereichs 404 im synthetische Bild 402 basierend auf Pixeln des Bildausschnitts 502 für den ersten Bereich 404 und dem Modell bestimmt. Hierzu wird im Beispiel ein Generator eingesetzt, der gemäß dem in NIPS 2014 beschriebenen Vorgehen ausgebildet ist. Diese Pixel können auch abhängig von wenigstens einer Regel bestimmt werden, die beispielsweise Pixel des Bildausschnitts 502 in den ersten Bereiche 404 kopiert.

In einem Schritt 708 wird ein Bildausschnitt 602 im digitalen Bild der Innenansicht 302 für den zweiten Bereich 406 basierend auf den Daten und dem Modell identifiziert. Beispielsweise ist ein Netzwerkteil zur Mustererkennung in Kleidungsstücken trainiert ein Etikett und seine Umgebung zu identifizieren. Diese Mustererkennung kann auch abhängig von wenigstens einer Regel erfolgen, die beispielsweise Pixel des Bildausschnitts 602 aufgrund spezifischer Farbgebung und/oder Form als Teil eines Etiketts identifiziert in zweiten Bereich 406 kopiert.

In einem Schritt 710 werden Pixel des zweiten Bereichs 406 basierend auf Pixeln des Bildausschnitts 602 für den zweiten Bereich 406 und dem Modell bestimmt. Hierzu wird im Beispiel der Generator eingesetzt, der gemäß dem in NIPS 2014 beschriebenen Vorgehen ausgebildet ist.

In einem Schritt 712 wird basierend auf den Daten und dem Modell, insbesondere dem Generator, das synthetische digitale Bild 402 generiert, in welchem im ersten Bereich 404, der die Öffnung des Kleidungsstücks in der Außenansicht 202 charakterisiert, ein zweiter Bereich 406 dargestellt ist, der zumindest einen Teil der Innenansicht 302 charakterisiert.

Das synthetische digitale Bild 402 umfasst bevorzugt einen dritten Bereich 408, der außerhalb des ersten Bereichs 404 angeordnet ist und der abhängig von den Pixeln bestimmt wird, die im digitalen Bild der Außenansicht 202 des Kleidungsstücks außerhalb des Abschnitts angeordnet sind.

Der erste Bereich 404, der zweite Bereich 406 und/oder optional der dritte Bereich 408 werden optional abhängig vom Modell skaliert und/oder zueinander ausgerichtet. Es kann auch eine andere Bildverarbeitungsfunktion zum Skalieren oder Ausrichten eingesetzt werden. Beispielsweise wird regelbasiert bestimmt, wie zu skalieren oder auszurichten ist. Eine beispielhafte Regel dafür sieht vor, dass eine Höhe und Breite der Bereiche dieselbe sein soll. Aufgrund einer Anzahl von Reihen und Spalten der Pixel, die den jeweiligen Bereich definieren, wird in diesem Fall ein Skalierfaktor bestimmt und angewendet um einen Bereich auf den anderen Bereich zu skalieren. Es kann vorgesehen sein, für das synthetische digitale Bild 402 abhängig von den Daten und abhängig vom Modell wenigsten ein Merkmal des synthetischen digitalen Bildes 402 zu bestimmen, das ein Merkmal für einen Übergang von einem der Bereiche zu einem anderen der Bereiche, ein Merkmal für eine Konvexität oder eine Schattierung definiert.

Dadurch wird ein synthetisches digitales Bild generiert, das eine photorealistische Darstellung des Kleidungsstücks darstellt.

In einem Schritt 714 wird das synthetische digitale Bild 402 im Speicher 106 gespeichert.

In einem Schritt 716 wird das synthetische digitale Bild 402 optional über die graphische Nutzerschnittstelle 104 ausgegeben.

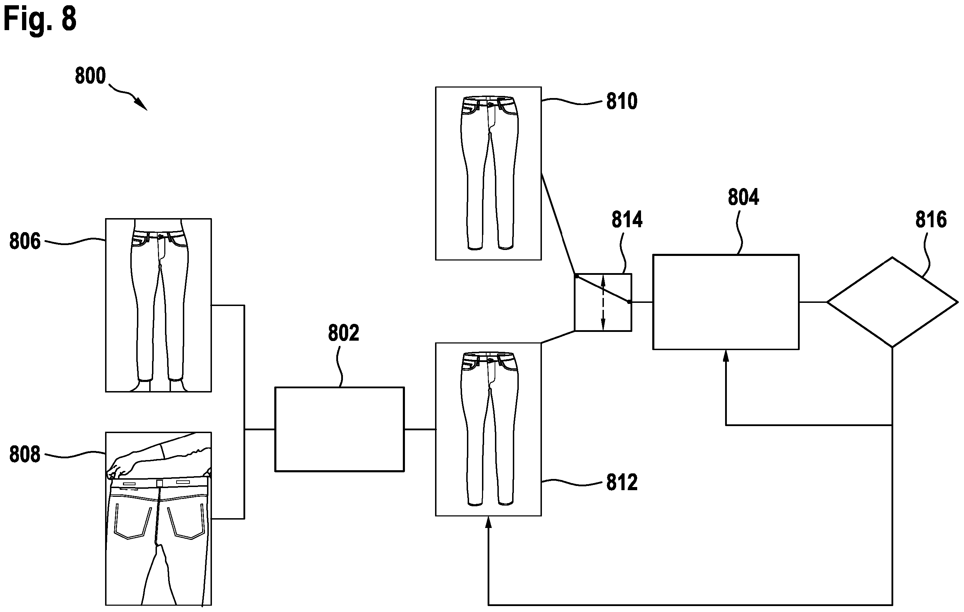

In Figur 8 sind Teile einer Vorrichtung 800 zum Trainieren der Vorrichtung 100 zur Bildverarbeitung schematisch dargestellt.

Die Vorrichtung 800 umfasst als Modell einen Generator 802 und als vergleichendes Modell einen Diskriminator 804. Ein erstes digitales Bild 806 stellt eine Außenansicht eines Kleidungsstückes, im Beispiel eine Hose, dar. Ein zweites digitales Bild 808 stellt eine Innenansicht des Kleidungsstücks dar. Ein Prüfbild 810 stellt das Kleidungsstück oder ein anderes Kleidungsstück in der gewünschten dreidimensionalen photorealistischen Darstellung dar. Das Prüfbild 810 wird im Beispiel manuell aus dem ersten Bild 806 und dem zweiten Bild 808 erstellt. Im Beispiel wird das Prüfbild 810 zufällig aus einer Verteilung von Prüfbildern gezogen, die manuell erstellt wurden. Es ist vorteilhaft, Prüfbilder zu verwenden, die den gewünschten synthetischen digitalen Bildern hinsichtlich des abgebildeten Inhaltes nahekommen. Beispielsweise werden für das Training zur Erzeugung von synthetischen digitalen Bildern von Kleidungsstücken Prüfbilder verwendet, die denselben Typ Kleidungsstücke darstellen. Im Beispiel werden Prüfbilder von Hosen für das Training für die Generierung von synthetischen digitalen Bildern von Hosen verwendet. Für die Erzeugung synthetischer digitaler Bilder von Oberteilen werden beispielsweise Prüfbilder verwendet, die Oberteile darstellen.

Der Generator 802 erhält Daten des ersten digitalen Bildes 806 und des zweiten digitalen Bildes 808, beispielsweise als Eingangstensor, der aus den Tripeln konkateniert wird, die die Pixel des ersten digitalen Bildes 806 und des zweiten digitalen Bildes 808 definieren. Ein Ausgangstensor des Generators 802 umfasst Daten für ein drittes digitales Bild 812. Der Ausgangstensor umfasst beispielsweise die Tripel, die die Pixel des dritten digitalen Bildes 812 definieren.

Für den Diskriminator 804 wird entweder aus dem Ausgangstensor oder aus Daten des Prüfbilds 810, im Beispiel aus einem Prüftensor, ein Eingangstensor für den Diskriminator 804 erzeugt. Im Beispiel wird eine Schalteinrichtung 814 eingesetzt, die entweder den Ausgangstensor des Generators 802 oder den Prüftensor des Prüfbilds 810 als Eingangstensor für den Diskriminator definiert.

Eine Ausgabeeinrichtung 816 ist im Beispiel ausgebildet, ein Vergleichsergebnis auszugeben. Die Ausgabe des Vergleichsergebnisses kann mit Werten zwischen Null und Eins erfolgen. Beispielsweise gibt ein Wert Eins an, dass der Eingangstensor des Diskriminators 804 ein vom Generator 802 generierten Ausgangstensor ist. Beispielsweise gibt ein Wert Null an, dass der Eingangstensor des Diskriminators 804 ein Prüftensor ist. Werte zwischen Null und Eins definieren eine Wahrscheinlichkeit, mit der der Eingangstensor ein Prüftensor oder ein Ausgangstensor des Generators 802 ist.

Die Ausgabeeinrichtung 816 ist im Beispiel zudem ausgebildet, wenigstens einen Parameter für den Generator 802 oder für den Diskriminator 804 in einem Trainingsverfahren abhängig vom Vergleichsergebnis zu bestimmen. Der Parameter oder die Parameter werden beispielsweise abhängig von der Wahrscheinlichkeit bestimmt. Es kann das in NIPS 2014 beschriebene Verfahren eingesetzt werden.

Die digitalen Bilder sind in Figur 8 anstelle der Tensoren graphisch dargestellt. Diese digitalen Bilder werden im Beispiel im Hintergrund, d.h. ohne graphische Darstellung, verarbeitet. Dazu werden die entsprechenden Tensoren gebildet und verarbeitet.

Die Recheneinrichtung 102 kann für das Training den Generator 802, den Diskriminator 804, die Schalteinrichtung 814 und die Ausgabeeinrichtung 816 umfassen. Die Recheneinrichtung 102 kann auch nur den trainierten Generator 802 umfassen. Die Schalteinrichtung 814 ist ausgebildet, entweder ein Prüfbild oder ein synthetisches digitales Bild an den Eingang des Diskriminators 804 zu senden. Die Entscheidung ob ein Prüfbild oder ein synthetisches digitales Bild oder welches Prüfbild aus einer Verteilung von vorgegebenen Prüfbildern verwendet wird, erfolgt im Beispiel zufällig. Dadurch wird der Diskriminator 804 besonders gut trainiert.

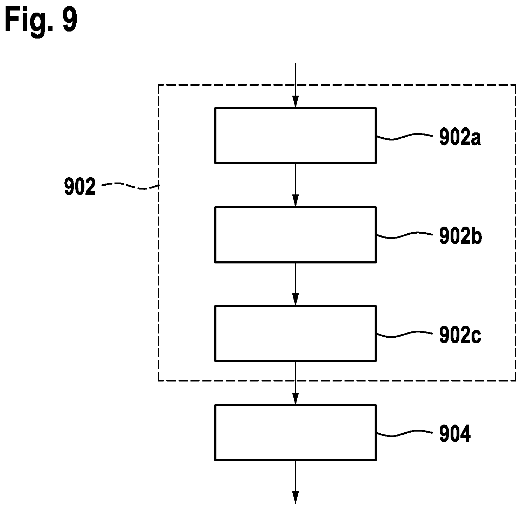

Figur 9 stellt Schritte des Trainingsverfahrens dar. Die Recheneinrichtung 102 ist im Beispiel ausgebildet, diese Schritte auszuführen.

In einer Phase 902 des Trainings wird abhängig von einer Vielzahl digitaler Bilder von Kleidungsstücken und einer Vielzahl Prüfbilder trainiert. Das Training erzeugt ein trainiertes Modell. Im Beispiel wird der Generator als generatives Modell trainiert. Es kann vorgesehen sein den Diskriminator als vergleichendes Modell ebenfalls zu trainieren.

An der Recheneinrichtung 102 wird im Training in einem Schritt 902a ein synthetisches digitales Bild erzeugt. Dazu kann das zuvor anhand Figur 7 beschriebene Verfahren zur Bildverarbeitung eingesetzt werden.

Im Training werden in einem Schritt 902b Daten basierend auf dem Prüfbild empfangen.

Im Training wird in einem Schritt 902c abhängig von den Daten basierend auf dem Prüfbild, synthetischen Daten des synthetischen digitalen Bildes und dem vergleichenden Modell, insbesondere dem Diskriminator, ein Vergleichsergebnis bestimmt.

Im Training wird in einem Schritt 902d wenigstens ein Parameter des Modells und/oder des vergleichenden Modells abhängig vom Vergleichsergebnis bestimmt.

Diese Schritte werden für eine Vielzahl Bilder wiederholt. Im Beispiel wird das Generative Adversarial Network trainiert. Das Modell wird insbesondere anhand mehrerer vorheriger digitaler Bilder anderer Kleidungsstücke erhalten.

In einer Phase 904 der Bildverarbeitung, wird das synthetische Bild mit dem zuvor trainierten Modell bestimmt. Dazu kann das zuvor anhand Figur 7 beschriebene Verfahren zur Bildverarbeitung eingesetzt werden.

Es kann vorgesehen sein, dass das Modell ein künstliches neuronales Netzwerk ist, in dem basierend auf dem ersten Eingangstensor ein Ausgangstensor erzeugt wird, der bereits die Daten des synthetischen digitalen Bildes umfasst. Das bedeutet, alle zuvor beschriebenen Schritte der Bildverarbeitung werden durch ein einziges künstliches neuronales Netzwerk ausgeführt. Es kann vorgesehen sein, dass einzelne der Schritte der Bildverarbeitung regelbasiert ausgeführt werden, um einen Eingangstensoren für ein künstliches neuronales Netzwerk zu bestimmen, das andere Schritte der beschriebenen Bildverarbeitung ausführt.

Es kann vorgehsehen sein, eine Mehrzahl von digitalen Bildern der Außenansicht desselben Kleidungsstücks zu verwenden. Dazu wird eine Mehrzahl Eingangstensoren dieser Bilder in den ersten Eingangstensor konkateniert und anschließend wie zuvor beschrieben vorgegangen.

## Patentansprüche

1. Verfahren zur Bildverarbeitung, **dadurch gekennzeichnet, dass** an einer Recheneinrichtung (102) Daten basierend auf digitalen Bildern einer Außenansicht (202, 806) eines Kleidungsstücks (204) und einer Innenansicht (302, 808) des Kleidungsstücks (204) empfangen werden (702), wobei basierend auf den Daten und einem Modell (802) ein synthetisches digitales Bild (402, 812) generiert wird (712), in welchem in einem ersten Bereich (404), der eine Öffnung des Kleidungsstücks (204) in der Außenansicht (202, 806) charakterisiert, ein zweiter Bereich (406) dargestellt ist, der zumindest einen Teil der Innenansicht (302, 808) charakterisiert, und wobei das synthetische digitale Bild (402, 812) über eine insbesondere graphische Nutzerschnittstelle (104) ausgegeben (716) und/oder in einem Speicher (106) gespeichert wird (714).

2. Verfahren nach Anspruch 1, **dadurch gekennzeichnet, dass** ein Bildausschnitt (502) in einem digitalen Bild der Außenansicht (202, 806) für den ersten Bereich (404) basierend auf den Daten identifiziert wird (704), wobei Pixel des ersten Bereichs (404) basierend auf Pixeln des Bildausschnitts (502) für den ersten Bereich (404) und dem Modell (802) oder abhängig von wenigstens einer Regel, unabhängig von anderen Pixeln des digitalen Bildes der Außenansicht (202, 806), bestimmt werden (706).

3. Verfahren nach einem der vorherigen Ansprüche, **dadurch gekennzeichnet, dass** abhängig von den Daten wenigstens eine Kante in einem digitalen Bild der Außenansicht (202, 806) des Kleidungsstücks identifiziert wird (704), wobei der erste Bereich (404) abhängig von der wenigstens einen Kante identifiziert wird.

4. Verfahren nach einem der vorherigen Ansprüche, **dadurch gekennzeichnet, dass** ein Bildausschnitt (602) in einem digitalen Bild der Innenansicht (302, 808) für den zweiten Bereich (406) basierend auf den Daten und dem Modell (802) oder abhängig von wenigstens einer Regel identifiziert wird (708), wobei Pixel des zweiten Bereichs (406) basierend auf Pixeln des Bildausschnitts (602) für den zweiten Bereich (406), unabhängig von anderen Pixeln des digitalen Bildes der Innenansicht (302, 808), bestimmt werden (710).

5. Verfahren nach einem der vorherigen Ansprüche, **dadurch gekennzeichnet, dass** in einem digitalen Bild der Außenansicht (202) des Kleidungsstücks ein Abschnitt identifiziert wird (704), der die Öffnung des Kleidungsstücks charakterisiert, wobei das synthetische digitale Bild (402, 812) einen dritten Bereich (408) umfasst, der außerhalb des ersten Bereichs (404) angeordnet ist und der abhängig von Pixeln bestimmt wird (712), die im digitalen Bild der Außenansicht (202) des Kleidungsstücks außerhalb des Abschnitts angeordnet sind.

6. Verfahren nach Anspruch 5, **dadurch gekennzeichnet, dass** der erste Bereich (404), der zweite Bereich (406) und/oder der dritte Bereich (408) skaliert und/oder zueinander ausgerichtet werden (712).

7. Verfahren nach Anspruch 5 oder 6, **dadurch gekennzeichnet, dass** für das synthetische digitale Bild (402, 812) abhängig von den Daten wenigsten ein Merkmal des synthetischen digitalen Bildes (402, 812) bestimmt wird (712), insbesondere ein Merkmal für einen Übergang von einem der Bereiche zu einem anderen der Bereiche, ein Merkmal für eine Konvexität oder eine Schattierung.

8. Verfahren nach einem der vorherigen Ansprüche, **dadurch gekennzeichnet, dass** an der Recheneinrichtung (102) Daten basierend auf einem Prüfbild empfangen werden, wobei abhängig von den Daten basierend auf dem Prüfbild oder synthetischen Daten des synthetischen digitalen Bildes (402, 812) mit einem vergleichenden Modell (804) ein Vergleichsergebnis bestimmt wird (902c), und wobei wenigstens ein Parameter des Modells (802) und/oder des vergleichenden Modells (804) abhängig vom Vergleichsergebnis bestimmt wird (902d).

9. Verfahren nach einem der vorherigen Ansprüche, **dadurch gekennzeichnet, dass** das Modell (802) und oder das vergleichende Modell (804) anhand mehrerer vorheriger digitaler Bilder anderer Kleidungsstücke erhalten wird (902) .

10. Verfahren nach Anspruch 9, **dadurch gekennzeichnet, dass** das Modell (802) und/oder das vergleichende Modell (804) in einer Phase (902) abhängig von einer Vielzahl digitaler Bilder von Kleidungsstücken und einer Vielzahl Prüfbilder trainiert wird, wobei das synthetische Bild (402) in einer anderen Phase (904) mit dem zuvor trainierten Modell (802) bestimmt wird.

11. Vorrichtung (100, 800) zur Bildverarbeitung, **dadurch gekennzeichnet, dass** die Vorrichtung (100) eine Recheneinrichtung (102) umfasst, die ausgebildet ist, Daten basierend auf digitalen Bildern einer Außenansicht (202, 806) eines Kleidungsstücks und einer Innenansicht (302, 808) des Kleidungsstücks zu empfangen, basierend auf den Daten und einem Modell (802) ein synthetisches digitales Bild (402, 812) zu generieren, in welchem in einem ersten Bereich (404), der eine Öffnung des Kleidungsstücks in der Außenansicht (202, 806) charakterisiert, ein zweiter Bereich (406) dargestellt ist, der zumindest einen Teil der Innenansicht (302, 808) charakterisiert, und wobei die Vorrichtung (100) eine insbesondere graphische Nutzerschnittstelle (104) umfasst, die ausgebildet ist, das synthetische digitale Bild (402, 812) auszugegeben und/oder wobei die Vorrichtung (100) einen Speicher (106) umfasst, der ausgebildet ist, das synthetische digitale Bild (402, 812) zu speichern.

12. Vorrichtung (100, 800) nach Anspruch 11, **dadurch gekennzeichnet, dass** die Recheneinrichtung (102) ausgebildet ist, das Verfahren nach einem der Ansprüche 2 bis 10 auszuführen.
